# EUROPÄISCHE PATENTSCHRIFT

(11) **EP 1 997 666 B1**
(45) Veröffentlichungstag und Bekanntmachung des Hinweises auf die Patenterteilung: **03.11.2010**
(21) Anmeldenummer: 08009171.3
(22) Anmeldetag: 19.05.2008
(51) Int. Cl.: B60K 28/06

(54) **Verfahren und Vorrichtung zur Erkennung eines Ermüdungszustands eines Fahrers eines Kraftfahrzeugs**
Method and device for recognizing a tiredness condition of a car driver
Procédé et dispositif pour indiquer l'état de fatigue d'un chauffeur d'un automobile

(30) Priorität: 01.06.2007 DE 102007025643
(43) Veröffentlichungstag der Anmeldung: 03.12.2008
(73) Patentinhaber: Volkswagen Aktiengesellschaft, 38436 Wolfsburg (DE)
(72) Erfinder: Strutz, Torsten, 38442 Wolfsburg (DE); Baumann, Peter, Dr., 31515 Wunstorf (DE); Block, Delf, 38102 Braunschweig (DE)

(56) Entgegenhaltungen:
- DE-A1-102004 047 861

## Beschreibung

Die Erfindung bezieht sich auf ein Verfahren zur Erkennung eines Ermüdungszustands eines Fahrers eines Kraftfahrzeugs. Weiterhin bezieht sich die Erfindung auf eine entsprechende Vorrichtung.

Verfahren und Vorrichtungen zur Erkennung eines Ermüdungszustands eines Fahrers eines Kraftfahrzeugs sind beispielsweise aus der EP 1 312 499 A2, der DE 10 2004 029 825 A1, der DE 10 2005 001 230 A1 und der DE 10 2005 026 456 A1 bekannt.

Unfallstatistiken zeigen, dass ein hoher Anteil schwerer Unfälle auf das Einschlafen des Fahrers am Lenkrad zurückzuführen ist. Aus dem Lenkverhalten ist es möglich, die Müdigkeit des Fahrers zu erkennen. Normalerweise zeigt der Fahrer ein unbewusstes Regelverhalten, bei dem er ständig die Lenkung korrigiert. Wird der Fahrer zunehmend müde, setzt dieses Regelverhalten aus und er hält das Lenkrad zunehmend starr und korrigiert dann schnell (sogenannter Dead-Band-Event). Zum Erkennen des Ermüdungszustands werden demzufolge Erelgnisse gesucht, bei denen auf eine Ruhephase eine Korrekturphase folgt. Durch eine geeignete Überwachung der Betätigung der Lenkung kann eine Ermüdung des Fahrers erkannt und der Fahrer durch geeignete Maßnahmen zu einer erhöhten Aufmerksamkeit angeregt oder gewarnt werden.

Gemäß der EP 1 312 499 A2 und der DE 10 2005 001 230 A1 kann zum Erkennen eines Ermüdungszustandes auf physiologische Daten des Fahrers wie beispielsweise das Lidschlussverhalten oder die Hauttemperatur zurückgegriffen werden, was Jedoch eine zusätzliche Sensorik bedingt.

Aus der DE 10 2004 047 861 A1 ist ferner bekannt, Im Rahmen eines Verfahrens und einer Vorrichtung zur Unterstützung des Fahrers ein Fahrzeugs bei der Einhaltung einer Fahrsprur zu Überwachen, ob in einem vorgegebenen Zeitintervall vor dem Erkennen eines Verlassens oder eines bevorstehenden Verlassens der Fahrspur keine Fahreraktivität oder eine Fahreraktivität unter einer vorgebbaren Schwelle vorliegt. Eine Fahreraktivität kann u.a. durch ein Lenkmoment, eine Betätigung der Bremse oder eine Gaspedalbetätigung erkannt werden.

In der DE 10 2004 029 825 A1 und der DE 10 2005 026 456 A1 wird hingegen vorgeschlagen, mittels eines hochauflösenden, lenkradnahen Lenkwinkelsensors die Lenktätigkeit des Fahrers zu erfassen und aus der erfassten Lenktätigkeit auf Mikroschlafereignisse zu schließen. Derartige Lenkwinkelsensoren sind bei Kraftfahrzeugen, die mit einer Lenkhilfe oder einem elektronischen Stabilitätsprogramm (ESP) ausgestattet sind, In der Regel vorhanden.

Es ist aber ebenfalls möglich, z.B. aus Kostengründen auf einen Lenkwinkelsensor am Lenkrad zu verzichten und seine Funktion durch eine rechnerische Abschätzung des Lenkwinkels zu ersetzen, In diesem Fall ist es erforderlich, für das ESP benötigte Lenkwinkel im Steuergerät der Lenkung anhand anderer Informationen zu berechnen.

Zwischen dem Lenkrad und dem Lenkgetriebe einer Lenkung Ist In der Regel ein Lenkmomentsensor zur Erfassung des Fahrerwunsches vorgesehen, der üblicherweise die Verdrehung eines im Bereich der Lenksäule oder -welle vorgesehenen Torsionsstabs erfasst. Das Signal des Lenkmomentsensors wird bei der Regelung der Lenkunterstützung, respektive der Lenkhilfskraft bzw. des Lenkhilfsmoments, berücksichtigt.

Bei einem Entfall des Lenkwinkelsensors am Lenkrad könnte für die Erkennung des Ermüdungszustands der im Steuergerät berechnete Lenkwinkel herangezogen werden. Eine solche Vorgehensweise liefert Jedoch nicht immer zufriedenstellende Ergebnisse. Da das Lenkrad und die Lenkung nicht starr miteinander gekoppelt sind, sondern, wie angegeben, unter anderem zur Ermittlung des Lenkmoments ein Torsionsstab in der Lenksäule zwischen dem Lenkrad und dem Lenkgetriebe eingekoppelt ist, weicht der berechnete Lenkwinkel von dem tatsächlichen Winkel am Lenkrad ab. Die Elastizitäten der Lenkung wirken zudem wie ein Tiefpassfilter, so dass für die Erkennung des Ermüdungszustands relevante Frequenzen weitgehend außerhalb des Beobachtungsbereichs liegen. Ohne einen mit dem Lenkrad gekoppelten Lenkwinkelsensor ist in einem solchen Fall die Lenktätigkeit des Fahrers nicht mit der für die Ermüdungserkennung erforderlichen Auflösung messbar.

Der Erfindung liegt die Aufgabe zugrunde, hier Abhilfe zu schaffen. Insbesondere zielt die Erfindung darauf ab, auch ohne einen Lenkwinkelsensor am Lenkrad eine schnelle und zuverlässige Ermüdungserkennung eines Fahrers zu realisieren.

Diese Aufgabe wird durch ein Verfahren gemäß Patentanspruch 1 sowie alternativ Patentanspruch 2 bzw. durch eine Vorrichtung gemäß Patentanspruch 9 sowie alternativ Patentanspruch 10 gelöst.

Der Verlauf des vom Fahrer aufgebrachten Lenkmoments korreliert stark mit der Lenkwinkelgeschwindigkeit am Lenkrad, so dass aus dem Verlauf eines das Lenkmoment repräsentierenden Signals auf den Ermüdungszustand des Fahrers geschlossen werden kann. Die Auswertung des Signalverlaufs kann dabei mit an sich bekannten Algorithmen erfolgen. Beispielsweise können hierzu die in der DE 10 2004 029 825 A1 und der DE 10 2005 026 456 A1 dargestellten Algorithmen verwendet werden.

Das Signal des Lenkmomentsensors Ist beispielsweise eine Weg- oder Winkelgröße, welche die Dehnung eines Torsionsstabs oder die Relativverdrehung zwischen einer über einen Torsionsstab gekoppelten Eingangs- und Ausgangswelle repräsentiert. Da die Elastizität des Torsionsstabs bekannt ist, entspricht die Weg- bzw. Winkelgröße dem zu erfassenden Moment.

Für eine sichere schnelle und genaue Erfassung des Ermüdungszustands des Fahrers, insbesondere schneller Korrekturbewegungen des Fahrers am Lenkrad am Ende eines Dead-Band-Events, wird aus dem Ausgangssignal des Lenkmomentsensors und einem Signal, welches einen berechneten Lenkwinkel oder eine berechnete Lenkwinkelgeschwindigkeit repräsentiert, ein Summensignal erzeugt und aus dessen Verlauf auf den Ermüdungszustand des Fahrers geschlossen.

Aus dem gleichen Grund ist es ebenfalls vorteilhaft, wenn der zeitliche Verlauf des Ausgangssignals des Lenkmomentsensors und eines Signals, welches einen berechneten Lenkwinkel oder eine berechnete Lenkwinkelgeschwindigkeit repräsentiert, verglichen und aus diesem Verlauf der beiden Signale auf den Ermüdungszustand des Fahrers geschlossen wird.

Vorteilhafte Ausgestaltungen und Verbesserungen sind in abhängigen Patentansprüchen angegeben.

Für eine einfache Bildung eines Summensignals bzw. für einen einfachen Vergleich des Ausgangssignals des Lenkmomentsensors und eines Signals, welches einen berechneten Lenkwinkel oder eine berechnete Lenkwinkeigeschwindigkeit repräsentiert, ist es von Vorteil, wenn das Ausgangssignal des Lenkmomentsensors als Drehwinkel und/oder Drehwinkelgeschwindigkeit Interpretiert wird.

Für eine zuverlässige Erfassung des Ermüdungszustands des Fahrers ist es zudem von Vorteil, wenn auf einen Ermüdungszustand des Fahrers geschlossen wird, wenn der Signalverlauf über ein oder mehrere vorgegebene Zeitintervalle innerhalb eines Toleranzbandes mit vorgegebener Bandbreite bleibt.

Bei Verzicht auf einen mit dem Lenkrad gekoppelten Lenkwinkelsensor Ist es zur einfachen Ermittlung von Lenkwinkel und/oder Lenkwinkelgeschwindigkeit von Vorteil, wenn ein Signal eines Motorlagesensors eines der elektrischen Lenkhllfeunterstützung dienenden Elektromotors erfasst wird. Dabei ist es von Vorteil, wenn aus dem Signal des Motorlagesensors der Lenkwinkel und/oder die Lenkwinkelgeschwindigkeit an den gelenkten Fahrzeugrädern bzw. der Lenkwinkel und/oder die Lenkwinkelgeschwindigkeit des Fahrers am Lenkrad berechnet wird.

Zur einfachen Ermittlung des vom Fahrer aufgebrachten Lenkmoments ist es vorteilhaft, wenn der Lenkmomentsensor eine Torsion einer Lenksäule mittels Dehnungsmessstreifen oder mittels eines Drehwinkelgebers erfasst.

Nachfolgend wird die Erfindung anhand eines In der Zeichnung dargestellten Ausführungsbeispiels näher erläutert. Die Zeichnung zeigt in:
- Figur 1: eine schematische Ansicht einer Vorrichtung zur Erkennung eines Ermüdungszustands eines Fahrers eines Kraftfahrzeugs nach einem ersten Ausführungsbeispiel der Erfindung.
- Figur 2: eine schematische Ansicht einer Vorrichtung zur Erkennung eines Ermüdungszustands eines Fahrers eines Kraftfahrzeugs nach einem zweiten Ausführungsbeispiel der Erfindung.

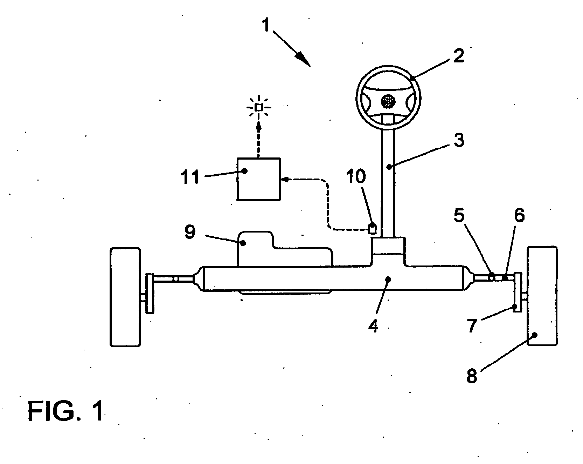

Das Ausführungsbeispiel in Figur 1 zeigt eine elektromechanische Lenkung 1 für ein Kraftfahrzeug. Die Lenkung 1 umfasst ein Lenkrad 2, über das von einem Fahrer ein Lenkmoment aufgebracht werden kann. Dieses Lenkmoment wird vom Lenkrad 2 über eine Lenksäule 3 an ein Lenkgetriebe 4 übertragen. Das Lenkgetriebe 4 weist eine Zahnstange auf, die an ihren Enden jeweils über ein Gelenk 5 mit einer Spurstange 6 gekoppelt ist. Jede Spurstange 6 greift an einem am Fahrzeugaufbau abgestützten Radträger 7 an, an dem ein Fahrzeugrad 8 gelagert ist. Über das Lenkgetriebe 4 wird das Lenkmoment in Form einer Lenkkraft längs der Zahnstange an den Spurstangen 6 und letztlich an den Fahrzeugrädern 8 zur Wirkung gebracht.

An geeigneter Stelle, bei dem Ausführungsbeispiel an dem Lenkgetriebe 4, wird ein Zusatzlenkmoment in die Lenkung 1 eingeleitet, um den Fahrer beim Lenken zu unterstützen. Dieses Zusatzlenkmoment wird bei der dargestellten Lenkung 1 durch einen Elektromotor 9 erzeugt, der beispielsweise achsparallel oder koaxial zu der Zahnstange angeordnet werden kann. Es ist auch möglich, den Motor an anderer Stelle anzuordnen oder einen Kraftangriff an der Lenksäule 3 vorzusehen. Zur Regelung des Elektromotors 9 kann dieser mit einem nicht dargestellten Motorlagesensor ausgestattet sein. Das Zusatzlenkmoment wird in Abhängigkeit des vom Fahrer aufgebrachten Lenkmoments eingestellt. Dieses den Fahrerwunsch repräsentierende Lenkmoment kann beispielsweise über einen Lenkmomentsensor 10 an der Lenksäule 3 erfasst werden.

Aus dem Lenkverhalten eines Fahrers kann auf einen Ermüdungszustande des Fahrers geschlossen werden. Normalerweise zeigt der Fahrer ein unbewusstes Regelverhalten, bei dem er ständig die Lenkung korrigiert. Wird der Fahrer zunehmend müde, setzt dieses Regelverhalten aus und er hält das Lenkrad zunächst starr und korrigiert dann schnell. Dieses Verhalten wird als Dead-Band-Event bezeichnet. Ziel ist es, diese Ereignisse, bei denen auf eine Ruhephase eine Korrekturphase mit deutlichen Abweichungen z.B. der Lenkwinkelgeschwindigkeit aus dem üblichen Korrekturbereich folgt, Im Lenkverhalten zu detektieren, wobei eine Häufung solcher Ereignisse auf eine zunehmende Müdigkeit hindeutet.

Erfindungsgemäß wird aus dem Signal des Lenkmomentsensors 10 auf einen Ermüdungszustand des Fahrers geschlossen. Der Lenkmomentsensor 10 kann beispielsweise Dehnungsmessstreifen aufweisen, die an einem in die Lenksäule 3 eingegliederten Torsionselement, beispielsweise einem Torsionsstab, appliziert sind. Jedoch können auch andere Sensorprinzipien zum Einsatz kommen. Insbesondere ist es möglich, einen Verdrehwinkel zwischen den Enden eines Torsionsstabs zu messen. In sämtlichen Fällen repräsentiert das Signal des Lenkmomentsensors 10 das anliegende Lenkmoment, aus dem aber, sofern erforderlich, wiederum ein Winkelmaß berechnet werden kann.

Das Ausgangssignal des Lenkmomentsensors 10 ist an eine Einrichtung 11 zum Auswerten des Signalverlaufs angelegt. In dieser ist ein Algorithmus zum Rückschluss auf einen Ermüdungszustand des Fahrers abgelegt. Wird, ein solcher Ermüdungszustand festgestellt, kann ein Warnsignal generiert und dem Fahrer zur Anzeige gebracht werden.

Bei der Auswertung des SIgnalverlaufs des Lenkmomentsensors 10 kann insbesondere auf Algorithmen zurückgegriffen werden, welche auf der Auswertung einer gemessenen Lenkwinkelgeschwindigkeit basieren. Dabei kann das Lenkmoment den Lenkwinkel als Eingangssignal im Algorithmus ersetzen.

Beispielsweise ist es möglich, auf das Vorliegen eines Ermüdungszustands des Fahrers dann zu schließen, wenn der Signalverlauf in einem vorgegebenen Zeitintervall, das lediglich einen Bruchteil einer Sekunde beträgt, innerhalb eines Toleranzbandes mit vorgegebener Bandbreite bleibt. Gegebenenfalls können auch mehrere solcher Zeitintervalle ausgewertet werden.

Die Einrichtung 11 zum Auswerten des Signalverlaufs wird vorzugsweise in einem Lenkungssteuergerät mituntergebracht.

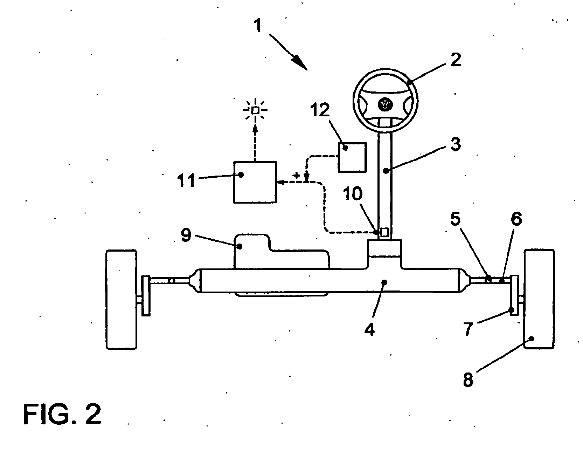

In einer Abwandlung des vorstehend erläuterten Ausführungsbeispiels wird das Signal des Lenkmomentsensors 10 als Drehwinkel interpretiert. Dieser kann mit einem im Lenkungssteuergerät 12 berechneten Lenkwinkel, der beispielsweise einem elektronischen Stabilitätsprogramm zur Verfügung gestellt wird, summiert werden. Das Summensignal bildet dann das Eingangssignal der Einrichtung 11 zum Auswerten des Signalverlaufs, wie dies in Figur 2 gezeigt ist. Die Torsion bzw. Verdrehung des Messelements kann über eine Kalibrlerung der gemessenen elektrischen Spannung in Bezug auf den Drehwinkel bestimmt werden. Damit lässt sich der Lenkwinkel aus der Summe von berechnetem Lenkwinkel der elektromechanischen Lenkung und der Torsion des Messelements bestimmen.

Da die Lage der Zahnstange bzw. der Spurstangen 6 mit der Stellung der Fahrzeugräder 8 korreliert, kann aber bei einem auf die Zahnstange bzw. auf die Lenksäule 3 wirkenden und mit einem Motoriagesensor ausgestatteten Elektromotor 9 mittels der Signale des Motorlagesensors die Stellung der Zahnstange und damit der Winkel der gelenkten Fahrzeugräder 8 und - direkt oder indirekt mit Hilfe des Ausgangssignals des Lenkmomentsensors - auch der Lenkwinkel am Lenkrad berechnet werden. Ebenso lässt sich selbstverständlich auch die entsprechende Lenkwinkelgeschwindigkeit berechnen.

Alternativ ist es zum Erhalt von weiteren Informationen möglich, dass der zeitliche Verlauf des Ausgangssignals des Lenkmomentsensors (10) und eines Signals, welches einen berechneten Lenkwinkel oder eine berechnete Lenkwinkelgeschwindigkeit repräsentiert, verglichen und aus diesem Verlauf der beiden Signale, also der zeitlichen Abfolge eines hohen Moments gefolgt von einem hohen berechneten Lenkwinkel oder einer hohen berechneten Lenkwinkelgeschwindigkeit, auf den Ermüdungszustand des Fahrers geschlossen wird. So können vorteilhafterweise der Ruhezustand über den Lenkmomentsensor und das Ausbrechen aus dem Ruhezustand über die z.B. mittels des Motorlagesensors errechneten Lenkwinkel oder Lenkwinkeigeschwindigkeiten erfasst werden.

Grundsätzlich sind für die Erfindung zum Erkennen eines Ermüdungszustands eines Fahrers neben dem Signalverlauf des Lenkmomentsensors sowohl die Betrachtung des Lenkwinkels als auch der Lenkwhkelgeschwindigkeit geeignet.

### Bezugszeichenliste

- 1: elektromechanische Lenkung
- 2: Lenkrad
- 3: Lenksäule
- 4.: Lenkgetriebe
- 5: Spurstangengelenk
- 6: Spurstange
- 7: Radträger
- 8: Fahrzeugrad
- 9: Elektromotor
- 10: Lenkmomentsensor
- 11: Auswertungsmittel
- 12: Lenkungssteuergerät .

## Patentansprüche

1. Verfahren zur Erkennung eines Ermüdungszustands eines Fahrers eines Kraftfahrzeugs, **dadurch gekennzeichnet, dass**
- ein Ausgangssignal eines Lenkmomentsensors (10) erfasst wird,
- ein Signal, welches einen Lenkwinkel oder eine Lenkwinkelgeschwindigkeit repräsentiert, berechnet wird,
- das Ausgangssignal und das Signal, welches einen Lenkwinkel oder eine Lenkwinkelgeschwindigkeit repräsentiert, summiert werden um ein Summensignal erzeugt, und
- aus dem Signalverlauf des Summensignals auf einen Ermüdungszustand des Fahrers geschlossen wird.

2. Verfahren zur Erkennung eines Ermüdungszustands eines Fahrers eines Kraftfahrzeugs, **dadurch gekennzeichnet, dass**
- ein Ausgangssignal eines Lenkmomentsensors (10) erfasst wird,
- ein Signal, welches einen Lenkwinkel oder eine Lenkwinkelgeschwindigkeit repräsentiert, berechnet wird,
- der zeitliche Verlauf des Ausgangssignals des Lenkmomentsensors (10) und des Signals, welches den berechneten Lenkwinkel oder die berechnete Lenkwinkelgeschwindigkeit repräsentiert, verglichen werden, und
- aus dem Verlauf der beiden Signale auf den Ermüdungszustand des Fahrers geschlossen wird.

3. Verfahren nach Anspruch 1 oder 2, **dadurch gekennzeichnet, dass** das Ausgangssignal des Lenkmomentsensors (10) als Drehwinkel und/oder Drehwinkelgeschwindigkeit interpretiert wird.

4. Verfahren nach einem der Ansprüche 1 bis 3, **dadurch gekennzeichnet, dass** auf einen Ermüdungszustand des Fahrers geschlossen wird, wenn der Signalverlauf über ein oder mehrere vorgegebene Zeitintervalle innerhalb eines Toleranzbandes mit vorgegebener Bandbreite bleibt.

5. Verfahren nach einem der Ansprüche 1 bis 4, **dadurch gekennzeichnet, dass** das Lenkwinkelsignal in einem Lenkungssteuergerät (12) berechnet wird.

6. Verfahren nach einem der Ansprüche 1 bis 5, **dadurch gekennzeichnet, dass** ein Signal eines Motorlagesensors eines der elektrischen Lenkhiffeunterstützung dienenden Elektromotors (9) erfasst wird.

7. Verfahren nach Anspruch 6, **dadurch gekennzeichnet, dass** aus dem Signal des Motorlagesensors der Lenkwinkel und/oder die Lenkwinkelgeschwindigkeit an den gelenkten Fahrzeugrädern (8) und/oder der Lenkwinkel und/oder die Lenkwinkelgeschwindigkeit des Fahrers am Lenkrad (2) berechnet wird.

8. Verfahren nach einem der Ansprüche 1 bis 7, **dadurch gekennzeichnet, dass** der Lenkmomentsensor (10) eine Torsion einer Lenksäule (3) mittels Dehnungsmessstreifen oder mittels eines Drehwinkelgebers erfasst.

9. Vorrichtung zur Erkennung eines Ermüdungszustands eines Fahrers eines Kraftfahrzeugs, umfassend:
- einen Lenkmomentsensor (10) zur Erfassung eines an einer Lenksäule (3) anliegenden Torsionsmoments und zur Erzeugung eines dieses repräsentierenden Signals, und
- ein Lenkungssteuergerät (12), das derart konfiguriert ist, um einen Lenkwinkel oder eine Lenkwinkelgeschwindigkeit zu berechnen und ein repräsentierendes Signal zu erzeugen, wobei der berechnete Lenkwinkel bzw. die berechnete Lenkwinkelgeschwindigkeit und das Signal des Lenkmomentsensors (10) zu einem Summensignal summiert werden und das hieraus resultierende Summensignal als Eingangssignal an die Auswertungsmittel (1) angelegt wird,
- Auswertungsmittel (11) zum Auswerten des Signalverlaufs des als Eingangssignal an die Auswertungsmittel angelegten Summensignals anhand eines Algorithmus zum Rückschluss auf einen Ermüdungszustand des Fahrers.

10. Vorrichtung zur Erkennung eines Ermüdungszustands eines Fahrers eines Kraftfahrzeugs, umfassend:
- einen Lenkmomentsensor (10) zur Erfassung eines an einer Lenksäule (3) anliegenden Torsionsmoments und zur Erzeugung eines dieses repräsentierenden Signals, und
- ein Lenkungssteuergerät (12), das derart konfiguriert ist, um einen Lenkwinkel oder eine Lenkwinkelgeschwindigkeit zu berechnen und ein repräsentierendes Signal zu erzeugen, und
- Auswertungsmittel (11) zum Auswerten des Signalverlaufs anhand eines Algorithmus zum Rückschluss auf einen Ermüdungszustand des Fahrers, wobei der zeitliche Verlauf des Ausgangssignals des Lenkmomentsensors (10) und des Signals, welches den berechneten Lenkwinkel bzw. die berechnete Lenkwinkelgeschwindigkeit repräsentiert, verglichen werden.

11. Vorrichtung nach Anspruch 9 oder 10, **dadurch gekennzeichnet, dass** der Lenkmomentsensor (10) ein Drehwinkelgeber ist oder Dehnungsmessstreifen aufweist.

12. Vorrichtung nach einem der Ansprüche 9 bis 11, **dadurch gekennzeichnet, dass** ein Motorlagesensor eines der elektrischen Lenkhilfeunterstützung dienenden Elektromotors vorgesehen ist, der zu Erfassung des Lenkwinkels oder der Lenkwinkelgeschwindigkeit dient.

## Claims

1. Method for detecting a tiredness state of a driver of a motor vehicle, **characterized in that**
- an output signal of a steering torque sensor (10) is acquired,
- a signal which represents a steering angle or a steering angle speed is calculated,
- the output signal and the signal which represents a steering angle or a steering angle speed are summed in order to generate a sum signal, and
- a tiredness state of the driver is inferred from the signal profile of the sum signal.

2. Method for detecting a tiredness state of a driver of a motor vehicle, **characterized in that**
- an output signal of a steering torque sensor (10) is acquired,
- a signal which represents a steering angle or a steering angle speed is calculated,
- the time profile of the output signal of the steering torque sensor (10) and that of the signal which represents the calculated steering angle or the calculated steering angle speed are compared, and
- the tiredness state of the driver is inferred from the profile of the two signals.

3. Method according to Claim 1 or 2, **characterized in that** the output signal of the steering torque sensor (10) is interpreted as a rotational angle and/or rotational angle speed.

4. Method according to one of Claims 1 to 3, **characterized in that** a tiredness state of the driver is inferred if the signal profile remains within a tolerance range with a predefined bandwidth over one or more predefined time intervals.

5. Method according to one of Claims 1 to 4, **characterized in that** the steering angle signal is calculated in a steering control unit (12).

6. Method according to one of Claims 1 to 5, **characterized in that** a signal of a motor position sensor of an electric motor (9) which serves to provide electrical steering assistance is acquired.

7. Method according to Claim 6, **characterized in that** the steering angle and/or the steering angle speed at the steered vehicle wheels (8) and/or the steering angle and/or the steering angle speed of the driver at the steering wheel (2) are/is calculated from the signal of the motor position sensor.

8. Method according to one of Claims 1 to 7, **characterized in that** the steering torque sensor (10) acquires a torsion of a steering column (3) by means of strain gauges or by means of a rotational angle signal generator.

9. Device for detecting a tiredness state of a driver of a motor vehicle, comprising:
- a steering torque sensor (10) for acquiring a torsion torque applied to a steering column (3) and for generating a signal which represents said torsion torque, and
- a steering control unit (12) which is configured to calculate a steering angle or a steering angle speed and to generate a representative signal, wherein the calculated steering angle or the calculated steering angle speed and the signal of the steering torque sensor (10) are summed to form a sum signal and the sum signal which results therefrom is applied as an input signal to the evaluation means (11),
- evaluation means (11) for evaluating the signal profile of the sum signal applied as an input signal to the evaluation means on the basis of an algorithm for determining a tiredness state of the driver.

10. Device for detecting a tiredness state of a driver of a motor vehicle, comprising:
- a steering torque sensor (10) for acquiring a torsion torque applied to a steering column (3) and for generating a signal which represents said torsion torque, and
- a steering control unit (12) which is configured to calculate a steering angle or a steering angle speed and to generate a representative signal, and
- evaluation means (11) for evaluating the signal profile on the basis of an algorithm, for determining a tiredness state of the driver, wherein the time profile of the output signal of the steering torque sensor (10) and that of the signal which represents the calculated steering angle or the calculated steering angle speed are compared.

11. Device according to Claim 9 or 10, **characterized in that** the steering torque sensor (10) is a rotational angle signal generator or has strain gauges.

12. Device according to one of Claims 9 to 11, **characterized in that** a motor position sensor of an electric motor which serves to provide electrical steering assistance and which serves to detect the steering angle or the steering angle speed is provided.

## Revendications

1. Procédé de détection d'un état de fatigue d'un conducteur d'un véhicule automobile, **caractérisé en ce que**
- un signal de sortie d'un détecteur de couple de direction (10) est détecté,
- un signal qui représente un angle de direction ou une vitesse angulaire de la direction est calculé,
- le signal de sortie et le signal qui représente un angle de direction ou une vitesse angulaire de la direction sont additionnés pour générer un signal total et
- un état de fatigue du conducteur est déduit de l'évolution du signal total.

2. Procédé de détection d'un état de fatigue d'un conducteur d'un véhicule automobile, **caractérisé en ce que**
- un signal de sortie d'un détecteur de couple de direction (10) est détecté,
- un signal qui représente un angle de direction ou une vitesse angulaire de la direction est calculé,
- l'évolution dans le temps du signal de sortie du détecteur de couple de direction (10) et du signal qui représente l'angle de direction calculé ou la vitesse angulaire de la direction calculée sont comparés et
- l'état de fatigue du conducteur est déduit de l'évolution des deux signaux.

3. Procédé selon la revendication 1 ou 2, **caractérisé en ce que** le signal de sortie du détecteur de couple de direction (10) est interprété comme un angle de rotation et/ou une vitesse angulaire de rotation.

4. Procédé selon l'une des revendications 1 à 3, **caractérisé en ce qu'**un état de fatigue du conducteur est déduit lorsque l'évolution du signal sur un ou plusieurs intervalles de temps prédéfinis reste à l'intérieur d'une bande de tolérance ayant une largeur de bande prédéfinie.

5. Procédé selon l'une des revendications 1 à 4, **caractérisé en ce que** le signal d'angle de direction est calculé dans un contrôleur de direction (12).

6. Procédé selon l'une des revendications 1 à 5, **caractérisé en ce qu'**un signal d'un détecteur de position de moteur d'un moteur électrique (9) servant d'assistance électrique à la direction est détecté.

7. Procédé selon la revendication 6, **caractérisé en ce que** l'angle de direction et/ou la vitesse angulaire de direction au niveau des roues orientables (8) du véhicule et/ou l'angle de direction et/ou la vitesse angulaire de direction du conducteur au niveau du volant (2) sont calculés à partir du signal du détecteur de position de moteur.

8. Procédé selon l'une des revendications 1 à 7, **caractérisé en ce que** le détecteur de couple de direction (10) détecte une torsion d'une colonne de direction (3) au moyen de jauges de contrainte ou au moyen d'un codeur angulaire.

9. Dispositif de détection d'un état de fatigue d'un conducteur d'un véhicule automobile, comprenant :
- un détecteur de couple de direction (10) pour détecter un couple de torsion appliqué à une colonne de direction (3) et pour générer un signal qui représente celui-ci et
- un contrôleur de direction (12) qui est configuré de manière à calculer un angle de direction ou une vitesse angulaire de la direction et pour générer un signal représentatif, l'angle de direction calculé ou la vitesse angulaire de la direction calculée et le signal du détecteur de couple de direction (10) étant additionnés en un signal total et le signal total qui en résulte étant appliqué comme signal d'entrée aux moyens d'interprétation (11),
- des moyens d'interprétation (11) pour interpréter l'évolution du signal total appliqué en tant que signal d'entrée aux moyens d'interprétation au moyen d'un algorithme en vue d'en déduire un état de fatigue du conducteur.

10. Dispositif de détection d'un état de fatigue d'un conducteur d'un véhicule automobile, comprenant :
- un détecteur de couple de direction (10) pour détecter un couple de torsion appliqué à une colonne de direction (3) et pour générer un signal qui représente celui-ci et
- un contrôleur de direction (12) qui est configuré de manière à calculer un angle de direction ou une vitesse angulaire de la direction et pour générer un signal représentatif, et
- des moyens d'interprétation (11) pour interpréter l'évolution du signal au moyen d'un algorithme en vue d'en déduire un état de fatigue du conducteur, l'évolution dans le temps du signal de sortie du détecteur de couple de direction (10) et le signal qui représente l'angle de direction calculé ou la vitesse angulaire de direction calculée étant comparés.

11. Dispositif selon la revendication 9 ou 10, **caractérisé en ce que** le détecteur de couple de direction (10) est un codeur angulaire ou présente des jauges de contrainte.

12. Dispositif selon l'une des revendications 9 à 11, **caractérisé en ce qu'**il est prévu un détecteur de position de moteur d'un moteur électrique servant d'assistance électrique à la direction, lequel sert à détecter l'angle de direction ou la vitesse angulaire de direction.
